# EUROPEAN PATENT SPECIFICATION

(11) **EP 2 904 244 B1**
(45) Date of publication and mention of the grant of the patent: **04.01.2017**
(21) Application number: 12766583.4
(22) Date of filing: 12.09.2012
(51) Int. Cl.: F02D 35/02, F02D 19/02, F02D 19/06, F02D 41/00, F02D 19/08, F02D 21/08

(54) **APPARATUS AND METHOD FOR KNOCK CONTROL**
VERFAHREN UND VORRICHTUNG FÜR DIE STEUERUNG KLOPFENDER VERBRENNUNG
APPAREIL ET PROCÉDÉ POUR CONTRÔL DE CLIQUETIS

(43) Date of publication of application: 12.08.2015
(73) Proprietor: Volvo Lastvagnar AB, 405 08 Göteborg (SE)
(72) Inventor: MAGNUSSON, Ingemar, S-411 27 Göteborg (SE); MANENTE, Vittorio, S-422 54 Göteborg (SE)
(74) Representative: Volvo Technology Corporation
(86) International application number: PCT/EP2012/003821
(87) International publication number: WO 2014/040606

(56) References cited:
- EP-A2- 0 849 454
- US-A- 4 315 492
- US-A1- 2003 209 234
- US-A1- 2008 127 933

## Description

### TECHNICAL FIELD

The present invention relates to an arrangement and method for knock control in a dual fuel engine, adapted to be used with natural gas or biogas and diesel. Such a method is suitable for the use in heavy vehicle engines.

### BACKGROUND ART

Under ideal conditions, a common internal combustion engine burns the fuel/air mixture in the cylinder in an orderly and controlled fashion. In a gasoline engine, the combustion is started by a spark plug at a few crankshaft degrees prior to the top dead center (TDC), depending on various factors including engine speed and load. This ignition advance allows time for the combustion process to develop a peak pressure at the ideal time for maximum recovery of work from the expanding gases.

In normal combustion, the flame front moves throughout the fuel/air mixture at a rate characteristic for the particular mixture. Pressure rises smoothly to a peak, as nearly all the available fuel is consumed, then pressure falls as the piston descends. Maximum cylinder pressure is achieved a few crankshaft degrees after the piston passes TDC, so that the increasing pressure can give the piston a hard push when its speed and mechanical advantage on the crank shaft gives the best recovery of force from the expanding gases.

When an unburned fuel/air mixture beyond the boundary of the flame front is subjected to a combination of heat and pressure for a certain duration, it may self-ignite with an instantaneous, explosive ignition in at least one pocket of fuel/air mixture outside of the flame front. A local shockwave is created around each pocket and the cylinder pressure may rise sharply beyond its design limits. If this is allowed to persist under extreme conditions or over many engine cycles, engine parts can be damaged or destroyed. This is referred to as knocking. Moderate knocking may create particles, which may cause wear on parts in the oil system before being trapped by the oil filter. Severe knocking can lead to catastrophic failure in the form of physical holes punched through the piston or cylinder head, which may introduce large metal fragments, fuel, and combustion products into the oil system.

There are different ways of avoiding knocking in a gasoline engine. One way is to use gasoline with high octane rating, which increases the combustion temperature of the fuel and reduces the proclivity to knocking. Another way is to use a richer fuel/air ratio, which adds extra fuel to the mixture that leads to a lower flame temperature and increases the cooling effect when the fuel vaporizes in the cylinder, or to reduce the combustion duration by increasing the engine revolution, or to increase the mixture turbulence or swirl by increasing engine revolutions or by increasing the turbulence by the combustion chamber design. It is also possible to decrease the manifold pressure by reducing the throttle opening or to reduce the load on the engine. US 2008/0127933 shows such an engine.

Because pressure and temperature are strongly linked, knock can also be attenuated by controlling peak combustion chamber temperatures by compression ratio reduction, exhaust gas recirculation, appropriate calibration of the engine's ignition timing schedule, and by a careful design of the engine's combustion chambers and cooling system as well as controlling the initial air intake temperature.

In dual-fuel engines, the engine is adapted to function with different fuels. Normally, the engine is adapted to function either with a specific single fuel or with a mixture of two different fuels. It is also possible that the engine is adapted to function with either one of the fuels separate or with a mixture of both fuels. One problem that may arise in such an engine is the differences in the used fuel qualities.

One type of dual-fuel engine operates in a mixed mode with a first fuel, typically natural gas, which is mainly combusted in a premixed flame propagation process and a second fuel, typically diesel, for which the combustion is initiated through an auto-ignition process and with a subsequent mixing controlled combustion process, similar to the process in direct injected diesel engines. Due to the premixing of the first fuel, auto-ignition of the first fuel can occur at a sufficiently high temperature and pressure. If the auto-ignition process is too rapid, it may lead to unwanted knock which e.g. can cause severe damage to the engine.

By adapting the engine compression ratio and the start of the diesel injection, knock can be controlled for a given quality of the first fuel, i.e. natural gas. The most important parameter related to knock for natural gas is the methane number, MN. A higher methane number value gives a lower tendency for knock. A particulate problem for natural gas as engine fuel is the wide spread in methane number, approximately from 70 to 95, depending of the origin of the gas. This range of methane numbers is very large and cause problems for present engine control system which can result in damaging knock if the engine is fuelled with a gas having a low MN.

One way to solve this problem is to optimise the engine for a low MN gas, e.g. by decreasing the compression ratio. This will lead to a lower efficiency when the engine is fuelled with a large fraction of diesel and/or with methane gas having a high MN. Another known solution to control knock in dual fuel engines is to delay the combustion by injecting the diesel fuel later. It is also possible to increase the amount of injected diesel fuel. These solutions, however, lead to a lowered efficiency and to a lower diesel substitution rate.

There is thus room for an improved arrangement and method for knock control in a dual fuel engine.

### DISCLOSURE OF INVENTION

An object of the invention is therefore to provide an improved arrangement for knock control in a dual fuel engine. A further object of the invention is to provide a method for knock control in a dual fuel engine.

The solution to the problem according to the invention is described in the characterizing part of claim 1 for the arrangement and in claim 10 for the method. The other claims contain advantageous further developments of the inventive arrangement and method for knock control in a dual fuel engine.

In an arrangement in a vehicle engine comprising an intake air manifold, an exhaust gas manifold and a plurality of cylinders, and being adapted for being operated by means of a dual fuel comprising diesel and gas fuel, said arrangement further comprising: an exhaust gas recirculation line connecting said exhaust gas manifold with said intake air manifold, an exhaust gas recirculation valve arranged in said exhaust gas recirculation line, and a control unit arranged for controlling the operation of the exhaust gas recirculation valve, the object of the invention is achieved in that the arrangement further comprises a knock sensor arranged on said engine and connected to said control unit; said control unit being adapted for opening said exhaust gas recirculation valve in the event that knocking is detected by said knock sensor.

By this first embodiment of the arrangement according to the invention, an arrangement for knock control in a dual fuel engine is provided, which allows the engine to use diesel and all varieties of natural gas in various combinations without causing knocking. This is achieved in that a small amount of exhaust gas recirculation is fed to the air intake manifold from the exhaust gas manifold. The amount of exhaust gas recirculation is controlled by a control unit which controls an exhaust gas recirculation valve. By only allowing a small fraction of exhaust gas recirculation, the fuel consumption is not increased.

The diesel engine is optimized to be used with high quality natural gas, e.g. methane having a methane number of 100. By introducing a small fraction of exhaust gas recirculation into the air intake manifold, gas of lower quality having a methane number of down to approximately 70 can be used without causing knock to occur.

In a method for controlling a dual fuel diesel engine, the steps of detecting knocking with a knock sensor and opening an exhaust gas recirculation valve with a control unit, where the control unit opens the valve proportionally to the detected knocking are comprised. By this method, it is possible to use methane gas of different qualities without causing knock in the engine. This is of advantage since the most fuel economic approach for an engine is to optimize the engine for the fuel with the highest quality, and to adapt the combustion for fuel of lower quality with a control strategy that avoids knocking.

### BRIEF DESCRIPTION OF DRAWINGS

The invention will be described in greater detail in the following, with reference to the attached drawing, where
- Fig. 1: shows a schematic engine according to the invention,
- Fig. 2: shows a flowchart of the method according to the invention.

### MODES FOR CARRYING OUT THE INVENTION

The embodiments of the invention with further developments described in the following are to be regarded only as examples and are in no way to limit the scope of the protection provided by the patent claims.

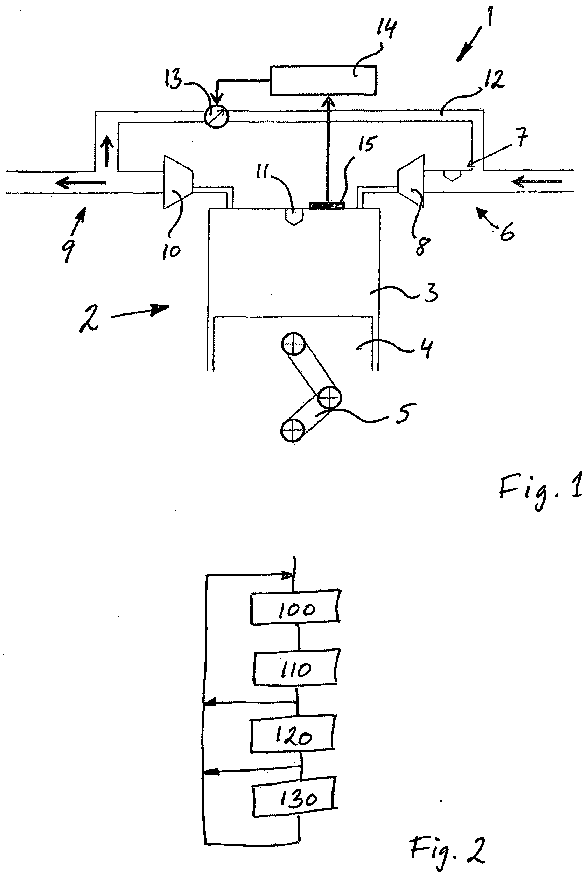

Fig. 1 shows a schematic engine arrangement 1 according to the invention. The engine 2 is a dual-fuel diesel engine adapted to be used with diesel fuel and gas fuel in the form of methane gas, such as natural gas or biogas. Depending on the origin of the gas, the energy in the gas will vary. The quality or the energy content of methane gas is defined by the methane number (MN), where a higher number indicates a higher energy level. A high-quality methane gas may have a MN of 95, while a lower grade methane gas has a MN of close to 70.

The engine is provided with a plurality of cylinders 3 having a piston 4 connected to a crank-shaft 5 in a known manner. The engine is further provided with an air intake manifold 6 in which a gas injector 7 for the methane gas is mounted. The air intake manifold is preferably provided with a compressor 8, adapted to pressurize the mixture of intake air and methane gas, when methane gas is used, or the intake air. The engine is also provided with an exhaust gas manifold 9 adapted to discard the exhaust gases. The exhaust gas manifold is preferably provided with an exhaust gas driven turbine 10 adapted to recover some of the energy from the exhaust gas in a known way. Each cylinder is also provided with a diesel injector 11 adapted to inject diesel, preferably from a common rail.

The arrangement is further provided with an exhaust gas recirculation (EGR) system, comprising an exhaust gas recirculation line 12 connecting the exhaust gas manifold 9 with the air intake manifold 6. In the exhaust gas recirculation line, an exhaust gas recirculation valve 13 is provided, which can open and close in a variable way. The EGR valve is controlled by a control unit 14, which may be comprised in an existing control unit of the vehicle, e.g. in an engine control unit. The engine is further provided with a knock sensor 15 mounted on the engine. The arrangement may be provided with one knock sensor or each cylinder may be provided with a knock sensor each. The knock sensor is connected to the control unit and gives a signal to the control unit if knocking is taking place and on the magnitude of knocking.

The control unit controls the EGR valve in dependency of the knock signal. When the knock sensor indicates that no knocking is present, the EGR valve is completely closed, since normal combustion in the engine does not require exhaust gas recirculation. When the knock sensor indicates that knocking is present, the EGR valve is opened somewhat. The opening of the EGR valve is proportional to the knock signal from the knock sensor. However, since the exhaust gas recirculation is only used to suppress knock of the engine, the maximal required opening of the EGR valve is relatively small, and is less than 30%. Preferably, the maximal opening is also less than 20%, and more preferably less than 10%, and most preferably less than 5%.

The arrangement may further comprise means for adapting the diesel injection timing in order to control knock of the engine. The means for adapting the injection timing will control the moment when diesel is injected into the cylinder. By combining the exhaust gas recirculation control with an adaptation of the injection timing, the knock control may be further enhanced, depending on the running conditions of the engine.

The arrangement may further comprise means for adapting the inlet air temperature to control knock of the engine. The inlet air temperature may be controlled e.g. by using an inter-cooler or by spraying water droplets into the air intake. By combining the exhaust gas recirculation control with an adaptation of the inlet air temperature, the knock control may be further enhanced, depending on the running conditions of the engine.

In the inventive arrangement and method, exhaust gas recirculation, EGR, is used as a control means to control knock in a dual fuel engine adapted to use natural gas and diesel as fuel. The EGR will thus be able to compensate for a varying MN of methane natural gas. It has been noticed that only small fractions of EGR are needed to avoid knock in an engine which is optimised for gas fuel having a high methane number, approximately 95, when the engine is fuelled with a gas fuel having a low MN in the region close to 70. Since the exhaust gas recirculation is used only to control knock, the EGR can be used without affecting the fuel consumption. In this way, it is possible to use a long route system that does not increase losses due to pump work. By integrating the EGR in the control strategy of the engine, knock can be suppressed. This is an advantage compared with a strategy where EGR is used as a not controlled means to lower risk for knock independently on the actual properties of the gas fuelling the engine.

It is also possible to adjust the timing of the diesel injection in combination with the exhaust gas recirculation valve control in order to suppress knock. The advantage of using exhaust gas recirculation as control means for suppressing knock is that the fuel consumption is not affected by the use of exhaust gas recirculation. An adjustment in the timing of the diesel injection will affect the fuel consumption negatively, but may be necessary in severe cases of knock.

The advantages of the invention compared to state of art solutions is improved control of knock in dual fuel type of engines by allowing control for a wider range of MN whilst maintaining high fuel efficiency.

In an example of the method for controlling a dual fuel diesel engine, exhaust gas recirculation is used as a control means to suppress knock. In step 100, knock is detected by using a knock sensor. The sensor sends a signal to the control unit indicating if knock occurs and also the magnitude of knock.

In step 110, the exhaust gas recirculation valve is opened with the control unit when the knock sensor detects a knock condition. The exhaust gas recirculation valve is opened in dependency of the knock signal. The opening of the exhaust gas recirculation valve is preferably proportional to the amount of detected knock. Depending on the quality of the used gas fuel, the opening of the exhaust gas recirculation valve can be adapted to the present condition.

In step 120, the control of the exhaust gas recirculation valve is combined with an adaptation of the diesel injection timing. Depending on the running condition of the engine, the knock control may be enhanced by a combination of diesel injection timing control and the control of the exhaust gas recirculation valve. If the knock control is sufficient with only control of the exhaust gas recirculation valve, this step may be omitted.

In step 130, the control of the exhaust gas recirculation valve is combined with an adaptation of the inlet air temperature. Depending on the running condition of the engine, the knock control may be enhanced by a combination of inlet air temperature control and the control of the exhaust gas recirculation valve. If the knock control is sufficient with only control of the exhaust gas recirculation valve, this step may be omitted.

The invention is not to be regarded as being limited to the embodiments described above, a number of additional variants and modifications being possible within the scope of the subsequent patent claims.

### REFERENCE SIGNS

- 1:: Arrangement
- 2:: Engine
- 3:: Cylinder
- 4:: Piston
- 5:: Crank-shaft
- 6:: Air intake manifold
- 7:: Gas injector
- 8:: Compressor
- 9:: Exhaust gas manifold
- 10:: Turbine
- 11:: Diesel injector
- 12:: Exhaust gas recirculation line
- 13:: Exhaust gas recirculation valve
- 14:: Control unit
- 15:: Knock sensor

## Claims

1. An arrangement (1) in a vehicle engine (2) comprising an intake air manifold (6), an exhaust gas manifold (9) and at least one cylinder (3), and being adapted for being operated by means of a dual fuel comprising diesel and gas fuel, said arrangement further comprising: an exhaust gas recirculation line (12) connecting said exhaust gas manifold (9) with said intake air manifold (6), an exhaust gas recirculation valve (13) arranged in said exhaust gas recirculation line (12), and a control unit (14) arranged for controlling the operation of the exhaust gas recirculation valve (13), **characterized in that** said arrangement further comprises a knock sensor (15) arranged on said engine (2) and connected to said control unit (14); said control unit (14) being adapted for opening said exhaust gas recirculation valve (13) in the event that knock is detected by said knock sensor (15).

2. Arrangement according to claim 1, **characterized in that** said duel fuel consists of diesel and methane gas fuel.

3. Arrangement according to any of claims 1 or 2, **characterized in that** said exhaust gas recirculation valve is variable.

4. Arrangement according to any of claims 1 to 3, **characterized in that** the arrangement further comprises means for adapting the diesel injection timing.

5. Arrangement according to any of claims 1 to 4, **characterized in that** the arrangement comprises means for adapting the inlet air temperature.

6. Arrangement according to any of claims 1 to 5, **characterized in that** said exhaust gas recirculation valve is opened in proportion to the knock sensor signal.

7. Arrangement according to any of claims 1 to 6, **characterized in that** said exhaust gas recirculation valve is opened by less than 30%.

8. Arrangement according to any of claims 1 to 6, **characterized in that** said exhaust gas recirculation valve is opened by less than 20%.

9. Arrangement according to any of claims 1 to 6, **characterized in that** said exhaust gas recirculation valve is opened by less than 10%.

10. Arrangement according to any of claims 1 to 9, **characterized in that** the engine is adapted to be used with a gas having a methane number in the interval between 100 and 70 without introducing knock.

11. Internal combustion engine, comprising an arrangement according to any of claims 1 to 10.

12. Method for controlling a dual fuel diesel engine, comprising the steps of detecting knock with a knock sensor and opening an exhaust gas recirculation valve with a control unit when the knock sensor detects a knock condition.

13. Method according to claim 12, where the control unit opens the exhaust gas recirculation valve in proportion to the knock sensor signal.

14. Method according to claim 13, where the exhaust gas recirculation valve is opened less than 30%.

15. Method according to any of claims 12 to 14, where the method further comprises the step of adapting the diesel injection timing to control knock.

16. Method according to any of claims 12 to 15, where the method further comprises the step of adapting the inlet air temperature to control knock.

## Patentansprüche

1. Anordnung (1) in einem Fahrzeugmotor (2), die einen Ansaugkrümmer (6), einen Auspuffkrümmer (9) und wenigstens einen Zylinder (3) umfasst und dafür eingerichtet ist, mittels eines Dualkraftstoffs betrieben zu werden, der Diesel- und Gaskraftstoff umfasst, wobei die Anordnung weiterhin umfasst: eine Abgasrückführungsleitung (12), die den Auspuffkrümmer (9) mit dem Ansaugkrümmer (6) verbindet, ein Abgasrückführungsventil (13), das in der Abgasrückführungsleitung (12) angeordnet ist, und eine Steuerungseinheit (14), die dafür vorgesehen ist, den Betrieb des Abgasrückführungsventils (13) zu steuern, **dadurch gekennzeichnet, dass** die Anordnung weiterhin einen Klopfsensor (15) umfasst, der an dem Motor (2) angeordnet und mit der Steuerungseinheit (14) verbunden ist; wobei die Steuerungseinheit (14) dafür eingerichtet ist, das Abgasrückführungsventil (13) in dem Fall zu öffnen, wenn von dem Klopfsensor (15) ein Klopfen erfasst wird.

2. Anordnung nach Anspruch 1, **dadurch gekennzeichnet, dass** der Dualkraftstoff aus Diesel- und Methangaskraftstoff besteht.

3. Anordnung nach einem der Ansprüche 1 oder 2, **dadurch gekennzeichnet, dass** das Abgasrückführungsventil variabel ist.

4. Anordnung nach einem der Ansprüche 1 bis 3, **dadurch gekennzeichnet, dass** die Anordnung weiterhin Mittel zur Einstellung des Diesel-Einspritzzeitpunkts umfasst.

5. Anordnung nach einem der Ansprüche 1 bis 4, **dadurch gekennzeichnet, dass** die Anordnung Mittel zur Einstellung der Ansauglufttemperatur umfasst.

6. Anordnung nach einem der Ansprüche 1 bis 5, **dadurch gekennzeichnet, dass** das Abgasrückführungsventil im Verhältnis zu dem Klopfsensorsignal geöffnet wird.

7. Anordnung nach einem der Ansprüche 1 bis 6, **dadurch gekennzeichnet, dass** das Abgasrückführungsventil um weniger als 30% geöffnet wird.

8. Anordnung nach einem der Ansprüche 1 bis 6, **dadurch gekennzeichnet, dass** das Abgasrückführungsventil um weniger als 20% geöffnet wird.

9. Anordnung nach einem der Ansprüche 1 bis 6, **dadurch gekennzeichnet, dass** das Abgasrückführungsventil um weniger als 10% geöffnet wird.

10. Anordnung nach einem der Ansprüche 1 bis 9, **dadurch gekennzeichnet, dass** der Motor dafür eingerichtet ist, mit einem Gas genutzt zu werden, dessen Methanzahl im Bereich zwischen 100 und 70 liegt, ohne dass ein Klopfen einsetzt.

11. Verbrennungsmotor, der eine Anordnung nach einem der Ansprüche 1 bis 10 umfasst.

12. Verfahren zur Steuerung eines Dualkraftstoff-Dieselmotors, das die Schritte umfasst: Erfassen eines Klopfens mit einem Klopfsensor und Öffnen eines Abgasrückführungsventils mit einer Steuerungseinheit, wenn der Klopfsensor einen Klopfzustand erfasst.

13. Verfahren nach Anspruch 12, bei dem die Steuerungseinheit das Abgasrückführungsventil im Verhältnis zu dem Klopfsensorsignal öffnet.

14. Verfahren nach Anspruch 13, bei dem das Abgasrückführungsventil um weniger als 30% geöffnet wird.

15. Verfahren nach einem der Ansprüche 12 bis 14, das weiterhin den Schritt umfasst, den Diesel-Einspritzzeitpunkt so einzustellen, dass das Klopfen gesteuert wird.

16. Verfahren nach einem der Ansprüche 12 bis 15, das weiterhin den Schritt umfasst, die Ansauglufttemperatur so einzustellen, dass das Klopfen gesteuert wird.

## Revendications

1. Agencement (1) dans un moteur de véhicule (2) comprenant un collecteur d'air d'admission (6), un collecteur de gaz d'échappement (9) et au moins un cylindre (3), et étant adapté pour être actionné au moyen d'un bicarburant comprenant un carburant diesel et un carburant gazeux, ledit agencement comprenant en outre : une conduite de recirculation de gaz d'échappement (12) reliant ledit collecteur de gaz d'échappement (9) audit collecteur d'air d'admission (6), une soupape de recirculation de gaz d'échappement (13) agencée dans ladite conduite de recirculation de gaz d'échappement (12), et une unité de commande (14) agencée pour commander le fonctionnement de la soupape de recirculation de gaz d'échappement (13),
**caractérisé en ce que** ledit agencement comprend en outre un capteur de cliquetis (15) agencé sur ledit moteur (2) et relié à ladite unité de commande (14) ; ladite unité de commande (14) étant adaptée pour ouvrir ladite soupape de recirculation de gaz d'échappement (13) dans le cas où un cliquetis est détecté par ledit capteur de cliquetis (15).

2. Agencement selon la revendication 1, **caractérisé en ce que** ledit bicarburant est constitué de carburant diesel et de carburant gaz méthane.

3. Agencement selon l'une des revendications 1 et 2, **caractérisé en ce que** ladite soupape de recirculation de gaz d'échappement est variable.

4. Agencement selon l'une des revendications 1 à 3, **caractérisé en ce que** l'agencement comprend en outre un moyen pour adapter le calage d'injection de diesel.

5. Agencement selon l'une des revendications 1 à 4, **caractérisé en ce que** l'agencement comprend un moyen pour adapter la température d'air d'entrée.

6. Agencement selon l'une des revendications 1 à 5, **caractérisé en ce que** ladite soupape de recirculation de gaz d'échappement est ouverte proportionnellement au signal de capteur de cliquetis.

7. Agencement selon l'une des revendications 1 à 6, **caractérisé en ce que** ladite soupape de recirculation de gaz d'échappement est ouverte de moins de 30%.

8. Agencement selon l'une des revendications 1 à 6, **caractérisé en ce que** ladite soupape de recirculation de gaz d'échappement est ouverte de moins de 20%.

9. Agencement selon l'une des revendications 1 à 6, **caractérisé en ce que** ladite soupape de recirculation de gaz d'échappement est ouverte de moins de 10%.

10. Agencement selon l'une des revendications 1 à 9, **caractérisé en ce que** le moteur est adapté pour être utilisé avec un gaz ayant un indice de méthane dans l'intervalle compris entre 100 et 70 sans provoquer un cliquetis.

11. Moteur à combustion interne, comprenant un agencement selon l'une des revendications 1 à 10.

12. Procédé pour commander un moteur diesel bicarburant, comprenant les étapes qui consistent à détecter un cliquetis avec un capteur de cliquetis et à ouvrir une soupape de recirculation de gaz d'échappement avec une unité de commande lorsque le capteur de cliquetis détecte une condition de cliquetis.

13. Procédé selon la revendication 12, où l'unité de commande ouvre la soupape de recirculation de gaz d'échappement proportionnellement au signal de capteur de cliquetis.

14. Procédé selon la revendication 13, où la soupape de recirculation de gaz d'échappement est ouverte de moins de 30%.

15. Procédé selon l'une des revendications 12 à 14, où le procédé comprend en outre l'étape qui consiste à adapter le calage d'injection de diesel pour réguler un cliquetis.

16. Procédé selon l'une des revendications 12 à 15, où le procédé comprend en outre l'étape qui consiste à adapter la température d'air d'entrée pour réguler un cliquetis.
